# EUROPÄISCHE PATENTSCHRIFT

(11) **EP 0 342 345 B1**
(45) Veröffentlichungstag und Bekanntmachung des Hinweises auf die Patenterteilung: **05.01.1994**
(21) Anmeldenummer: 89106008.9
(22) Anmeldetag: 06.04.1989
(51) Int. Cl.: B60Q 3/02

(54) **Elektrische Innenraumleuchte für Kraftfahrzeuge**
Interior light for a motor vehicle
Eclairage intérieur pour véhicule

(30) Priorität: 18.05.1988 DE 3816908; 21.06.1988 DE 3820829
(43) Veröffentlichungstag der Anmeldung: 23.11.1989
(73) Patentinhaber: Priesemuth, Wolfgang, Dipl.-Ing., 25524 Itzehoe (DE)
(72) Erfinder: Priesemuth, Wolfgang, Dipl.-Ing., 25524 Itzehoe (DE)
(74) Vertreter: Niedmers, Ole, Dipl.-Phys.

(56) Entgegenhaltungen:
- DE-A- 2 111 288
- DE-A- 3 318 393
- US-A- 3 636 514
- US-A- 4 071 805
- PATENT ABSTRACTS OF JAPAN vol. 9, no. 282 (M-428)(2005) 09 November 1985,
- & JP-A-60 124550 (NIPPON DENKI KK) 03 Juli 1985,

## Beschreibung

Die Erfindung betrifft eine elektrische Leuchte, insbesondere als Leuchte zur Beleuchtung des Innenraums von Kraftfahrzeugen.

Im allgemeinen werden Leuchten zur Beleuchtung des Innenraums von Kraftfahrzeugen durch sogenannte Türkontaktschalter eingeschaltet, und zwar in der Regel beim Öffnen der Fahrzeugtür. Das Einschalten der Leuchte über die Beleuchtung des Innenraums wird dann beendet, wenn beispielsweise nach Verlassen einer Person des Innenraumes des Kraftfahrzeuges oder nach dem Einsteigen in den Innenraum die Tür wieder geschlossen wird. Die bisherige Art der Einschaltung der Beleuchtung des Innenraums sowie der dazu normalerweise verwendeten Türkontaktschalter sind nachteilig, da einerseits, beispielsweise wenn eine Person im Innenraum des Fahrzeugs Platz genommen hat, nach dem Schließen der Tür die Beleuchtung normalerweise wegen wieder geschlossenen Türschalters ausgeschaltet wird und das andererseits Türkontaktschalter bis heute ein mechanisch und funktionell problematisches Bauteil für den Einsatz in Kraftfahrzeugen sind. Das hat seinen Grund darin, das der Türkontaktschalter in einem Bereich der Türöffnung eines Kraftfahrzeuges eingebaut werden muß, der fertigungsbedingt erhöhte Toleranzungenauigkeiten mit sich bringt, so daß der Türkontaktschalter entweder beim Einbau genau justiert werden muß oder aber es müssen Türkontaktschalter vorgesehen werden, die einen extrem langen Hub aufweisen, um die großen Maßtoleranzen zu überwinden.

Allen elektrischen Leuchten dieser Art haftet, wie schon erwähnt, zudem der Nachteil an, daß gerade dann, wenn nach dem Öffnen der Tür bei Dunkelheit die Person im Innenraum des Kraftfahrzeuges Platz genommen hat und die Tür geschlossen wurde, die Beleuchtung durch den Türschalter zwangsweise wieder ausgeschaltet worden ist und kein Licht zu Verfügung steht, um beispielsweise den Zündschlüssel schnell in das Zündschloß zu stecken. Dafür muß bisher immer gesondert vom Türkontaktschalter mittels eines zweiten parallel geschalteten Schalters der Innenraum über die elektrische Leuchte beleuchtet werden und anschließend muß dieser parallele Schalter wieder ausgeschaltet werden. In der US-A-4 071 805 ist ein Innenraumbeleuchtungssystem beschrieben, bei dem die Beleuchtung nach dem Schließen einer Tür für ein vorbestimmtes Zeitintervall eingeschaltet bleibt.

Es ist Aufgabe der vorliegenden Erfindung eine elektrische Leuchte zu schaffen, bei der kein gesonderter Türkontaktschalter zum Einschalten der Leuchte vorgesehen zu werden braucht, die mit einfachen Mitteln installiert und kostengünstig hergestellt werden kann und es ermöglicht, daß einer Person, nachdem sie im Innenraum Platz genommen hat, wenigstens für die notwendigen Handlungen zur Inbetriebnahme des Kraftfahrzeuges Licht zur Verfügung steht.

Gelöst wird die Aufgabe gemäß der Erfindung durch einen mit der Leuchte wenigstens elektrisch in Verbindung stehenden Sensor, der schalterlos wenigstens das Öffnen wenigstens einer Tür zum Innenraum erfaßt und nachfolgend ein Signal auf eine Schalteinrichtung liefert, die die elektrische Leuchte ein vorbestimmtes vorwählbares Zeitintervall lang einschaltet.

Der Vorteil der erfindungsgemäßen Leuchte besteht im wesentlichen darin, daß die bisher üblichen kompliziert aufgebauten Türkontakschalter entfallen können, was auch einen weiteren Vorteil nach sich zieht, daß nämlich ein gesonderter Montage- und Installationsaufwand entfällt. Die eingeschaltete Beleuchtung nach Schließen der Tür ein vorbestimmtes Zeitintervall lang hat den Vorteil, daß beispielsweise die das Kraftfahrzeug benutzende Person ausreichend Zeit hat, um den Zündschlüssel bei beleuchtetem Innenraum in das Zündschloß zu stecken und das Kraftfahrzeug zu starten oder aber auch noch Zeit genug zur Verfügung hat, um im beleuchteten Zustand beispielsweise den Anschnallgurt anzulegen oder aber auch noch irgendwelche Gegenstände in das Handschuhfach zu legen oder diesem zu entnehmen.

Ein gesondertes Ausschalten der elektrischen Leuchte ist gemäß der Erfindung ebenfalls nicht mehr nötig, da nach dem vorbestimmten Zeitintervall die Beleuchtung automatisch wieder ausgeht.

Gemäß einer vorteilhaften Ausgestaltung der Erfindung umfaßt die Schalteinrichtung wenigstens ein elektrisches Stromstoßrelais, dessen Haltezeit gemäß dem gewünschten Zeitintervall einstellbar ist. Die Version einer Zeitschaltung für die zeitliche Beleuchtung des Innenraumes nach Auslösung durch den Sensor mittels eines Stromstoßrelais ist eine sehr kostengünstige Variante zum Aufbau einer Zeitverzögerungsschaltung. Es sind an Stelle des Stromstoßrelais aber auch elektronische Lösungen möglich, die beispielsweise durch als Zählerschaltungen ausgebildete integrierte Schaltkreise gebildet werden, oder aber durch einen monostabilen Multivibrator (Mono-Flop) der in Form eines integrierten Schaltkreises oder durch einzelne elektronische Bauelemente ausgebildet sein kann.

Der Sensor zur Erfassung des Öffnens der Tür des Kraftfahrzeugs kann entweder unmittelbar in der elektrischen Leuchte angeordnet sein, d.h. als Bestandteil der elektrischen Leuchteneinrichtung schlechthin, oder aber irgendwo im Innenraum des Kraftfahrzeugs an geeigneter Stelle postiert sein und über elektrische Leitungen mit der elektrischen Leuchte verbunden sein.

Gemäß einer weiteren anderen Ausgestaltung der Erfindung erfaßt der Sensor dabei eine Veränderung des Umgebungsdrucks relativ zu seinem Befestigungsort im Innenraum des Kraftfahrzeugs. Es ist bekannt, daß beim Öffnen der Fahrzeugtür, und zwar auch dann, wenn die Fenster zum Innenraum des Fahrzeugs nicht vollständig geschlossen sind, ein Unterdruck entsteht, während beim Schließen der Tür des Kraftfahrzeugs im Innenraum bei ansonsten gleichen Bedingungen ein Überdruck entsteht. Der Sensor kann derart ausgebildet sein, daß er entweder auf einem entstehenden Unterdruck oder auf einen entstehenden Überdruck im Innenraum des Kraftfahrzeugs reagiert, oder so eingestellt sein, daß er generell auf eine Druckänderung anspricht.

Vorzugsweise wird dabei der Sensorkörper aus einer Druckdose gebildet, die mit einer geeigneten Membran versehen ist, wobei die Membran mit einem damit zusammenwirkenden Schalter in Verbindung steht, so daß bei Ansprechen der Membran der Schalter geschlossen und die elektrische Leuchte ein vorbestimmtes Zeitintervall lang eingeschaltet wird.

Nach einer weiteren vorteilhaften Ausführungsform der Erfindung wird der Sensor durch eine Einrichtung nach Art eines Mikrofons gebildet, wobei sich diese Ausführungsform insbesondere dann eignet, wenn ein hochempfindlicher Sensor zur Erfassung der Öffnung bzw. des Schließens der Tür erforderlich ist.

Es sind auch Umstände denkbar, daß weder ein auf Druckänderung im Innenraum des Kraftfahrzeuges ansprechender Sensor noch einer auf ein Geräusch ansprechender Sensor vorgesehen werden können, wenn beispielsweise während des Betriebes des Kraftfahrzeuges starke Druckänderungen im Innenraum zu erwarten sind oder aber der Geräuschpegel im Innenraum des Kraftfahrzeuges so groß wird, daß eine Mikrofoneinrichtung zur Auslösung der elektrischen Leuchte nicht verwendbar ist. Zum Zwecke der Lösung bei derart auftretenden Problemen kann es vorteilhat sein, daß im Innenraum ein von einem Sender erzeugtes Wechselfeld vorhanden ist, dessen Verstimmung durch Öffnen der Tür und/oder dem Eintritt oder dem Aussteigen einer Person in den Innenraum bzw. aus dem Innenraum des Kraftfahrzeugs heraus durch den Sensor erfaßt wird. Der Sensor ist in diesem Fall in der Regel Teil einer das Wechselfeld erzeugenden elektrischen bzw. elektronischen Schaltung.

Das Wechselfeld kann dabei vorzugsweise ein HF-Feld oder auch ein Ultraschallfeld oder ein Mikrowellenfeld sein.

Vorzugsweise ist bei einer weiteren Ausgestaltung der Leuchte im Innenraum ein Sensor zur Erzeugung von UV-Strahlung vorhanden, wobei vom Sensor wenigstens beim Öffnen der Tur eine Störung der UV-Strahlung erfaßt wird. Die Störung liefert, schaltungsmäßig elektronisch geeignet aufbereitet, ein Signal auf die Schalteinrichtung, die auf beschriebene Weise die elektrische Leuchte ein vorbestimmtes Zeitintervall lang einschaltet.

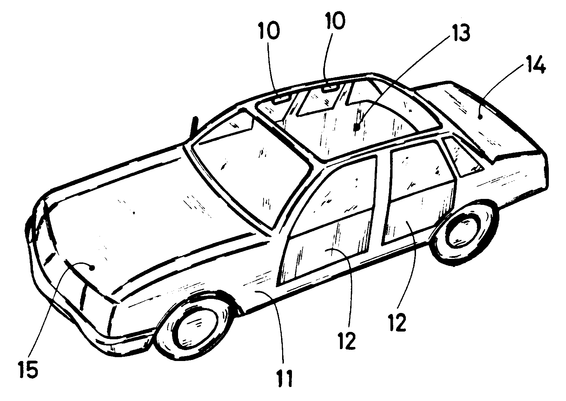

Die Erfindung wird nun unter Bezugnahme auf die einzige Figur, die ein Personenkraftfahrzeug in perspektivischer teilweise durchbrochener Darstellung zeigt, im einzelnen anhand eines Ausführungsbeispieles beschrieben.

Im Innenraum 13 eines Kraftfahrzeugs 11, das ein PKW, ein LKW oder ein sonstiges beliebiges Anderes Kraftfahrzeug sein kann, ist wenigstens eine elektrische Leuchte 10 angebracht, die mit einem Sensor elektrisch in Verbindung steht. Der Sensor kann dabei unmittelbar in der elektrischen Leuchteneinrichtung angeordnet sein, so daß gesonderte Sensorbauteile nicht vorgesehen zu werde brauchen, was wiederum den Vorteil hat, daß die Herstellungskosten einer solchen Leuchte 10 gegenüber Herstellungskosten einer gesonderten Leuchte und eines gesonderten Sensors und die für die Installation der elektrischen Leitungen zwischen beiden entstehenden Kosten entfallen.

Beim Öffnen der Tür 12, wobei diese Tür eine beliebige Tür sein kann, die den Zugang einer Person zum Innenraum des Kraftfahrzeugs gestattet, erfaßt der nicht dargestellte Sensor, je nach Ausgestaltung des Sensors entweder einen Unter/Überdruck, der beim Öffnen der Tür 12 bzw. beim Schießen der Tür 12 entsteht oder aber er erfaßt ein Geräusch, wobei in diesem Falle dann der Sensor als Mikrofoneinrichtung ausgebildet ist. Nach Erfassung der Türöffnung wird infolgedessen ein Signal vom Sensor auf eine Schalteinrichtung, die eine elektrische, eine elektromechanische oder eine elektronische Schalteinrichtung sein kann, geliefert, wobei die Schalteinrichtung die elektrische Leuchte zur Beleuchtung des Innenraums des Kraftfahrzeugs ein vorbestimmtes Zeitintervall lang einschaltet. Grundsätzlich kann das Zeitintervall lang so kurz gewählt werden, daß es der Person, die im Innenraum 13 des Fahrzeugs Platz genommen hat, so erscheint, als ob mit dem Schließen der Tür 12 die Innenraumbeleuchtung wieder erlischt, d.h. daß vorbestimmte Zeitintervall kann auch so kurz eingestellt werden auf eine Zeit, die normalerweise zwischen dem Öffnen einer Tür 12 und dem Platz nehmen einer Person auf dem Sitzplatz im Innenraum 13 des Kraftfahrzeugs 11 bis zum nachfolgenden Schießen der Tür 12 vergeht.

Das Zeitintervall kann aber auch so eingestellt werden, daß die Leuchte beispielsweise zehn Sekunden nach dem wiederum erfolgten Schließen der Tür 12, nachdem die das Fahrzeug betretende Person die Tür 12 wieder verschlossen hat, eingeschaltet bleibt.

Ein manuelles Einschalten der elektrischen Leuchte 10 neben den erfindungsgemäßen Einschalten durch einen zusätzlichen Handschalter oder dergl., der zur Schalteinrichtung gemäß der Erfindung im wesentlichen parallel geschaltet ist, kann vorgesehen sein.

Darüber hinaus ist auch ein Einsatz der elektrischen Leuchte 10 beispielsweise nicht nur für den Raum, der den Personen in einem Kraftfahrzeug zur Verfügung steht, denkbar, sondern ebenfalls auch ein Einsatz als Leuchte zur Beleuchtung des Kofferraums in Kraftfahrzeugen oder zur Beleuchtung des Motorraums oder dergl., beispielsweise ein Einschalten der Leuchte beim Öffnen der Kofferraumklappe bzw. der Motorhaube.

### Bezugszeichenliste

- 10: Elektrische Leuchte
- 11: Kraftfahrzeug
- 12: Tür
- 13: Innenraum
- 14: Kofferraum
- 15: Motorraum

## Patentansprüche

1. Elektrische Leuchte, insbesondere als Leuchte zur Beleuchtung des Innenraums von Kraftfahrzeugen, gekennzeichnet durch einen mit der Leuchte (10) wenigstens elektrisch in Verbindung stehenden Sensor, der schalterlos wenigstens das Öffnen wenigstens einer Tür (13) zum Innenraum erfaßt und nachfolgend ein Signal auf eine Schalteinrichtung liefert, die die elektrische Leuchte (10) ein vorbestimmtes Zeitintervall lang einschaltet.

2. Leuchte nach Anspruch 1, dadurch gekennzeichnet, daß die Schalteinrichtung wenigstens ein elektrisches Stromstoßrelais umfaßt, dessen Haltezeit gemäß dem gewünschten Zeitintervall einstellbar ist.

3. Leuchte nach einem oder beiden der Ansprüche 1 oder 2, dadurch gekennzeichnet, daß der Sensor eine Veränderung des Umgebungsdrucks erfaßt.

4. Leuchte nach Anspruch 3, dadurch gekennzeichnet, daß der Sensor einen Sensorkörper mit einer Membran umfaßt.

5. Leuchte nach Anspruch 3, dadurch gekennzeichnet, daß der Sensor durch ein Mikrofon gebildet wird.

6. Leuchte nach einem oder beiden der Ansprüche 1 oder 2, dadurch gekennzeichnet, daß im Innenraum (13) ein von einem Sender erzeugtes Wechselfeld vorhanden ist, dessen Verstimmung durch den Sensor wenigstens beim Öffnen der Tür (12) erfaßt wird.

7. Leuchte nach Anspruch 6, dadurch gekennzeichnet, daß das Wechselfeld ein HF-Feld ist.

8. Leuchte nach Anspruch 6, dadurch gekennzeichnet, daß das Wechselfeld ein Ultraschallfeld ist.

9. Leuchte nach Anspruch 6, dadurch gekennzeichnet, daß das Wechselfeld ein Mikrowellenfeld ist.

10. Leuchte nach einem oder mehreren der Ansprüche 1 oder 2, dadurch gekennzeichnet, daß im Innrenraum (13) ein Sender zur Erzeugung von UV-Strahlung vorhanden ist, wobei vom Sensor wenigstens beim Öffnen der Tür (12) eine Störung der UV-Strahlung erfaßt wird.

## Claims

1. An electric light particularly a light for illuminating the interior of motor vehicles, characterised by, at least electrically connected to the light (10), a sensor which, without a switch, ascertains at least the opening of at least one door (13) to the interior and then delivers a signal to a switching means which switches the electric light (10) on for a predetermined period of time.

2. A light according to claim 1, characterised in that the switching means comprises at least one electrical time pulse relay, the latching time of which is adjustable according to the period of time required.

3. A light according to one or both of claims 1 or 2, characterised in that the sensor ascertains a variation in ambient pressure.

4. A light according to claim 3, characterised in that the sensor comprises a sensor body with a diaphragm.

5. A light according to claim 3, characterised in that the sensor is constituted by a microphone.

6. A light according to one or both of claims 1 or 2, characterised in that in the interior (13) there is generated by a transmitter an alternating current field the de-tuning of which is ascertained by the sensor at least upon opening of the door (12).

7. A light according to claim 6, characterised in that the alternating current field is a high frequency field.

8. A light according to claim 6, characterised in that the alternating current field is an ultrasonic field.

9. A light according to claim 6, characterised in that the alternating current field is a microwave field.

10. A light according to one or more of claims 1 or 2, characterised in that there is in the interior (13) a sensor for generating ultraviolet rays, the sensor ascertaining a disturbance in the ultraviolet rays at least when the door (12) is opened.

## Revendications

1. Lampe électrique, en particulier pour l'éclairage de l'habitacle de véhicules automobiles, caractérisée par l'utilisation d'un capteur relié au moins électriquement avec la lampe (10), qui détecte sans interrupteur au moins l'ouverture d'au moins une porte (13) de l'habitacle et par la suite délivre un signal à un interrupteur qui commute la lampe électrique (10) après un intervalle de temps prédéterminé.

2. Lampe selon la revendication 1, caractérisée en ce que l'interrupteur comprend au moins un relais d'appel de courant électrique dont le temps de maintien est réglable en fonction de l'intervalle de temps désiré.

3. Lampe selon une ou deux des revendications 1 ou 2, caractérisée en ce que le capteur détecte un changement de pression ambiante.

4. Lampe selon la revendication 3, caractérisée en ce que le capteur comprend un corps avec une membrane.

5. Lampe selon la revendication 3, caractérisée en ce que le capteur est construit à partir d'un microphone.

6. Lampe selon une ou deux des revendications 1 ou 2, caractérisée en ce qu'est prévu dans l'habitable (13) un champ alternatif produit par un émetteur, dont le désaccord de fréquences est détecté par l'intermédiaire du capteur, au moins lors de l'ouverture de la porte (12).

7. Lampe selon la revendication 6, caractérisée en ce que le champ alternatif est un champ HF.

8. Lampe selon la revendication 6, caractérisée en ce que le champ alternatif est un champ ultra-sons.

9. Lampe selon la revendication 6, caractérisée en ce que le champ alternatif est un champ micro-ondes.

10. Lampe selon l'une ou plusieurs des revendications 1 ou 2, caractérisée en ce que dans l'habitacle (13), est prévu un émetteur pour la production d'un rayonnement UV, une perturbation du rayonnement UV étant détectée par le capteur au moins lors de l'ouverture de la porte (12).
